(19) Europäisches Patentamt
European Patent Office
Office européen des brevets

(11) **EP 4 618 105 A1**

(12) **EUROPEAN PATENT APPLICATION**

(43) Date of publication:
**17.09.2025 Bulletin 2025/38**

(21) Application number: **24162790.0**

(22) Date of filing: **11.03.2024**

(51) International Patent Classification (IPC):
***G21C 1/02*** *(2006.01)*     ***G21C 3/54*** *(2006.01)*
***G21C 1/03*** *(2006.01)*

(52) Cooperative Patent Classification (CPC):
**G21C 1/02; G21C 3/54; G21C 17/10; G21D 3/10;**
G21C 1/03; G21C 17/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Saltfoss Energy ApS
2200 Copenhagen (DK)**

(72) Inventors:
• **BURES , Lubomír
2200 Copenhagen (DK)**
• **RODRIGUEZ RUOCCO, Ivanna
2200 Copenhagen (DK)**
• **SCHOFIELD, Andreas Vigand
2200 Copenhagen (DK)**

(74) Representative: **Meissner Bolte Partnerschaft
mbB
Patentanwälte Rechtsanwälte
Postfach 86 06 24
81633 München (DE)**

(54) **A METHOD OF OPERATING A MOLTEN SALT REACTOR**

(57)     The present invention relates to a method of operating an MSR, said MSR comprising a reactor core, a fuel loop for molten fuel salt providing a flow path of molten fuel salt into the reactor core through a reactor core inlet and out of the reactor core through a reactor core outlet, said method comprising the steps of: providing at least one location $m_i$ on the fuel loop at a distance $L_i$ measured along the flow path from the reactor core outlet, wherein the one or more locations $m_i$ is outside the reactor core, and the one or more locations $m_i$ is shielded from the reactor core measuring the neutron source strength at the one or more locations $m_i$ obtaining one or more calculated operating parameters by calculation with input of the value of the measured neutron source strength at one or more locations $m_i$.

FIGURE 1

## Description

### Field of the invention

The present invention relates to a method of operating a molten salt reactor (MSR) where operating parameters such as for example the reactor power, the molten fuel salt velocity and molten fuel salt temperature are calculated from measuring neutron source strength. Knowing the operating parameter values for a nuclear reactor such as an MSR is of fundamental importance for the operation of the reactor. The measurement of neutron source strength is done on the fuel loop outside the reactor core of the MSR.

### Background of the Invention

Molten salt reactors (MSRs) are based on a critical concentration of a fissile material dissolved in a molten salt. The molten salt comprising the fissile material is commonly referred to as the fuel salt or molten fuel salt. Research was conducted on MSRs initially at the Oak Ridge National Laboratory (ORNL) in the 1950's and 1960's but is yet to be successfully commercialised. MSRs have several advantages over other reactor types, including those being in commercial use nowadays. MSRs are capable of breeding fissile $^{233}$U from thorium, of producing much lower levels of transuranic actinide waste than uranium/plutonium fuelled reactors; capable of operating at high temperatures, capable of avoiding accumulation of volatile radioactive fission products in solid fuel rods and capable of utilising larger amounts of fissile material than is possible in conventional reactors. Other particular attractive features of an MSR are the operation at ambient or low pressure and the retention of the fission products as strongly bonded salts which are conventionally either fluoride salts or chloride salts.

The fission of fissile nuclei produces 2, 3, or more free neutrons that can sustain the nuclear fission chain reaction. All the formed neutrons are not emitted at the same time and are categorised into two groups depending on their formation: 1) Prompt Neutrons. emitted within a very short time of about $10^{-14}$ seconds directly from a fission of a nucleus; 2) Delayed Neutrons which are emitted by certain neutron-rich fission fragments (fission products) termed delayed neutron precursors (DNPs). The emission of these delayed neutrons takes place several orders of magnitude later than the emission of the prompt neutrons.

The prompt neutrons have much shorter mean generation time of around $10^{-5}$s than delayed neutrons having a value of around 0.1s. The short period of $10^{-5}$s causes a very fast response of the reactor power for prompt neutrons contributing to the power from a fission event. When the chain reaction is only self-sustained by the prompt neutrons the reactor is very unstable because one neutron generation takes only $10^{-5}$s. The delayed neutrons on the other hand provide a means for controlling the reactor in practice. It is possible to design the reactor so that the number of prompt neutrons is lower for a critical condition thus being sub-critical. At the same time the reactor is designed so that the additional delayed neutrons give the required criticality, thus a critical condition. Therefore, all nuclear fission reactors must operate in the prompt subcritical, delayed critical condition and all power producing reactors are designed to operate in delayed critical conditions. The fraction of the number of neutrons being delayed neutrons to the total number of neutrons is less than 1% but it would not be possible to control a nuclear fission power reactor without them. The delay which is determined by the half-lives of the delayed neutron precursors ranges from a few milliseconds up to 55 s for the longest-lived delayed neutron precursor $^{87}$Br.

The type of molten salt reactor (MSR) where the fuel salt is continuously transported in a loop into and out of the reactor core presents a particular case regarding the delayed neutrons. The fuel salt flow velocity may for example be 1 m/s and the flow path in the core may be a few meters. Therefore, a fraction of the delayed neutron precursors created in the core is transported out of the core before the delayed neutron precursor decays and emits the delayed neutron. This fraction of the delayed neutrons is therefore emitted outside the core and does not contribute to fission events. This is contrary to the case of a conventional reactor such as the light water reactor (LWR) where the fissile material is a solid and is stationary in fuel tubes inside the core. It is noted that it is possible to control an MSR even despite some of the delayed neutrons being lost for the fission chain reaction.

Nuclear power parameters are important operating parameters for all types of nuclear reactors both MSR's and LWR's and the operator needs to know the reactor power at any given moment.

In general, reactor power is determined by the total number of fission reactions per unit time in the reactor, and when the reactor reaches steady-state operation, the fission release energy is instantaneous. In this way, the reactor power can be correlated with the total number of fissions per unit time, thus the neutron flux. It is an advantage to have fast response from a measuring device when asserting the reactor power. The current reactor power values are therefore given by the neutron flux measured by excore neutron detectors. It is the only system capable of fast reactivity excursion detection. This nuclear power measurement is an input signal for automatic control rod movement in response to a reactivity excursion and it is typically obtained from the highest of four power range excore nuclear instruments. The main purpose of the control rod system is to control the motion of neutron absorbing rods into the core to lower the reactivity in the case of a positive power excursion. The control system moves the rods in response to demand signals from either the reactor operator or from the automatic rod control system.

In contrast to the above so-called "fast signal" from the excore neutron detectors a much more accurate value of the thermal power can be measured with a thermal balance method relying on a signal with a slow response time to the reactivity (the so-called "slow signal").

The accurate thermal power of the reactor can be measured only by methods based on the energy balance of the primary circuit or the energy balance of the secondary circuit. These methods provide accurate reactor power, but these methods are insufficient for safety systems. Signal inputs to these calculations are, for example, the hot leg temperature or the flow rate through the secondary salt (coolant salt) system, and these signals change very slowly with neutron power changes. In other words, the thermal power measured by calorimetric methods is accurate. In contrast, the nuclear power measured by excore neutron detectors is the only system capable of fast reactivity excursion detection."

Other operating parameters than the above-mentioned reactor power parameter are necessary to measure to enable a safe operation of the reactor or for fulfilling the regulations for the operation of an MSR. These parameters and measurements are among other the fuel salt flow velocity, molten salt temperature, reactor pressure, online corrosion monitoring, fissile inventory measurements especially for plutonium, as outlined in "Instrumentation Framework for Molten Salt Reactors" by Oak Ridge National Laboratory, ORNL/TM/2018/868.

"Instrumentation Framework for Molten Salt Reactors" by Oak Ridge National Laboratory, ORNL/TM/2018/868 discloses that fission power monitoring for an MSR is foreseen to resemble the monitoring made at other types of nuclear power plants. Excore neutron detectors are suggested to monitor the fission rate. Neutron detectors could be calibrated for overall power production by heat balance measurement, which would be performed by measuring the temperature rise and mass flow rate of coolant salt across the secondary coolant side of the primary heat exchangers.

The document further discloses that in-core power profile measurements would likely be made using SPNDs (self-powered neutron detectors) or ion-chamber strings. A high-temperature gamma thermometer string could be a more reliable, albeit less mature, alternative measurement technology for use at MSRs, but this would require development and demonstration.

The document yet further discloses that an activation-based flowmeter could be employed on fluoride coolant salts, taking advantage of the neutron interaction properties of $^{19}$F due to the delayed neutrons in the primary heat exchange. The components of activation flowmeters are stated as mature technology. The document mentions that no specific system has been developed and demonstrated for MSRs. The delayed neutrons are activating $^{19}$F with this method and not detected so that the neutron source strength is not measured.

CN114974630A discloses a power measurement method for an MSR.

The MSR has an upper chamber above the molten fuel salt where gaseous fission products are collected by purging with an Ar cover gas and the gaseous fission products are then transported out of the upper chamber for further treatment and storage. The gaseous fission products are noble gases such as $^{135}$Xe or $^{85}$Kr. The power value of the MSR is obtained by measuring the activity of e.g., $^{135}$Xe or the activity of activated Ar such as $^{41}$Ar in the cover gas. The activity measurement is compared to a calculated value for different power values. Thus, the method has a method step of comparing a measured value and a calculated value of activity. There is no mention of measuring DNP activity and no disclosure of neutron flux measurements.

WO20014452 discloses a measurement method for flow velocity of a molten salt for an MSR. The method comprises measurements with ultrasonic wave signals traversing a flowing molten salt where the salt flows in a pipe. There is no mention of measuring DNP activity and no disclosure of neutron flux measurements.

## Summary of the invention

It was an object of the present invention to provide a reactor monitoring system for an MSR during operation.

It was an object of the present invention to provide a reactor monitoring system for an MSR during start-up.

It was an object of the present invention to improve the redundancy of the important operating parameters of an MSR and a safer operation of the MSR.

In accordance with an aspect of the invention, a method of operating an MSR is provided, said MSR comprising a reactor core, a fuel loop for molten fuel salt providing a flow path of molten fuel salt into the reactor core through a reactor core inlet and out of the reactor core through a reactor core outlet, said method comprising the steps of: providing at least one location mi on the fuel loop at a distance Li measured along the flow path from the reactor core outlet, wherein the one or more locations mi is outside the reactor core, and the one or more locations mi is shielded from the reactor core; measuring the neutron source strength at the one or more locations mi; obtaining one or more calculated operating parameters by calculation with input of the value of the measured neutron source strength at one or more locations mi.

In accordance with another aspect of the invention, there is provided an MSR comprising: a reactor core, a fuel loop for molten fuel salt providing a flow path of molten fuel salt into the reactor core through a reactor core inlet and out of the reactor core through a reactor core outlet, at least one location $m_i$ on the fuel loop at a distance $L_i$ measured along the

flow path from the reactor core outlet, wherein the one or more locations $m_i$ is outside the reactor core, and the one or more locations $m_i$ is shielded from the reactor core, at least one detector for a neutron source strength at the one or more locations $m_i$, preferably adapted to a method according to at least one of the claims 1-14.

**Detailed Description**

The method of operating an MSR wherein the MSR comprises a reactor core, a fuel loop for molten fuel salt providing a flow path of molten fuel salt into the reactor core through a reactor core inlet and out of the reactor core through a reactor core outlet, said method comprising the steps of: providing at least one location mi on the fuel loop at a distance Li measured along the flow path from the reactor core outlet, wherein the one or more locations mi is outside the reactor core, and the one or more locations mi is shielded from the reactor core; measuring the neutron source strength at the one or more locations mi; obtaining one or more calculated operating parameters by calculation with input of the value of the measured neutron source strength at one or more locations mi.

We find that such a method for MSR operation has numerous advantages.

The possibility of obtaining the value of several operating parameters from the same set of measurement equipment with the method presents an advantage. These operating parameters are for example a precise reactor power value and the molten fuel salt temperature at selected points of the fuel salt loop. Given that the same piece of hardware, first and foremost a neutron detector at a location on the molten fuel salt loop can be used to provide several operating parameters, it is an advantageous way of providing a determination of operating parameters.

Direct measurements of operating parameters for MSR's are notoriously difficult because of the corrosivity and high temperature of the molten salt. Any measurement instrument in direct contact with the molten salt is prone for a fast deterioration. The invention overcomes this problem by using well-known conventional neutron detectors in the vicinity of the molten fuel salt loop but not in direct contact with the molten salt. The conventional way of determining the reactor power with a required precision for a safe operation is the enthalpy method using the transfer of heat from a primary loop to a secondary loop, a so-called "slow signal" as described above. Even though the MSR also comprises a primary and secondary fuel loop for such an enthalpy method, the loops involved in an MSR transport very large masses of molten salt which causes a much longer transfer time of heat from one loop to the other. The method of determining the reactor power with the present invention does not rely on the heat transfer between loops and overcomes the problem of how to obtain a precise determination from a "slow signal".

The value of one or more operating parameters determined by the method according to the invention may be supplemented by values obtained from conventional auxiliary methods. This adds to a more secure determination of the operating parameters because two independent methods are used for the determination and the invention has the advantage that the double determination can be carried out for several operating parameters with a single type of measurement hardware first and foremost a neutron detector at a location on the molten fuel salt loop.

In one embodiment, a method of operating an MSR is provided, said MSR comprising a reactor core, a fuel loop for molten fuel salt providing a flow path of molten fuel salt into the reactor core through a reactor core inlet and out of the reactor core through a reactor core outlet, said method comprising the steps of: providing at least one location $m_i$ on the fuel loop at a distance $L_i$ measured along the flow path from the reactor core outlet, wherein the one or more locations $m_i$ is outside the reactor core, and the one or more locations $m_i$ is shielded from the reactor core; measuring the neutron source strength at the one or more locations $m_i$; obtaining one or more calculated operating parameters by calculation with input of the value of the measured neutron source strength at one or more locations $m_i$.

Most types of molten salt reactors (MSRs) are based on obtaining criticality with a fissile material dissolved in a molten salt. When the MSR uses a fissile material dissolved in a molten salt, the salt is referred to as the fuel salt (or molten fuel salt).

The nuclear fission produces energetic neutrons typically at an energy range from 100 keV to 2 MeV. The probability of a fission event occurring depends on the neutron energy. In a so-called fast reactor, the unmoderated (fast) neutrons produced from the fission events interact directly with other nuclei. Thermal and epi-thermal nuclear fission reactors rely on moderators to first reduce the energy of the energetic neutrons of 100 keV to 2 MeV to thermal neutrons which are typically stated to be 0.025 eV which is the kinetic energy at ambient temperature. Such thermal neutrons have a higher probability of inducing a fission event for e.g., U-235 as a prominent example of a fissile material. To summarise, nuclear fission reactors can thus be operated by two different principles, namely fast reactors and thermal/epi-thermal reactors. In a fast reactor, the energetic neutrons interact directly with fissile material to produce energy, fission products and energetic neutrons. In thermal and epi-thermal reactors, the energetic neutrons produced by fission exchange energy with a moderator material such as graphite and eventually interact with fissile material to produce energy, fission products and more energetic neutrons.

When using a molten fuel salt, the fissile material is dissolved in the molten salt comprising carrier salts and the carrier salts are preferably fluoride- or chloride-based salts.

In one embodiment, the molten fuel salt is a fluoride-based salt.

In one embodiment, the MSR comprises a molten fuel salt circulating in channels or interstices in the reactor core comprising a moderator of graphite.

In one embodiment the method of operating an MSR is a method of monitoring the operation of the MSR.

In one embodiment the method of operating an MSR is a start-up method of the MSR. Restricted Access

During start-up, the temperature differences between the first and the second circuit are small. These small temperature differences render the conventional power measurement method using the thermal balance principle between a first and a second circuit almost useless. The use of neutron detectors for measuring the delayed neutron source strength according to the invention overcomes this problem. The start-up method relies on the relation between the core reactivity and the neutron source strength and not the slow transfer of heat between two circuits of similar temperature during start-up.

In one embodiment, the method of operating an MSR is a start-up method of the MSR wherein the neutron source strength is measured at two or more locations $m_i$, preferably three, four, five or more locations. The index "i" denotes the specific location and distinguishes several locations from each other, for example two locations $m_1$ and $m_2$ from each other.

The inherent neutron source strength arises from processes such as the creation of neutrons from (alpha, n)-reactions and may be of a considerable high value compared to the neutron sources strength value during start-up. This may result in a background noise for the measurement of the neutron source strength at a location $m_i$ on the fuel loop during start-up. The (alpha, n)-reactions may take place in a fluoride containing fuel where $^{19}F$ reacts with alpha emission arising from the inherent presence of $^{234}U$ alpha-decaying in the fuel:

$$\alpha + {}^{19}F \rightarrow {}^{22}Na + n.$$

In the event that the inherent source strength value poses a problem when measuring the neutron source strength at a location $m_i$, then two or more locations may advantageously be used. The reason is that the inherent source strength is supposed to be constant at two or more locations along the fuel loop whereas the neutron source strength value arising from delayed neutrons will in general differ from location to location. The reason for the difference in value among the locations is that the delayed neutron precursors are decaying with a decay constant $\lambda_k$ of the precursor group k resulting in varying neutron source strength values along the locations separated on the loop in distance and also in time. The data set arising from two or more locations can be used to differentiate out the inherent neutron source strength by a suitable data processing algorithm to obtain a valid neutron source strength value for the aspect of the invention of a start-up method of obtaining the reactor power value or another operating parameter.

The fission processes take place in the reactor core and in the case of a thermal fission reactor the moderator is present in the core. In one embodiment the moderator material is a liquid, preferably a molten hydroxide salt or water or heavy water.

In one embodiment, the reactor material is a solid, preferably graphite. The moderator can be assembled from several segments of moderator material for example several graphite blocks with a hexagonal or rectangular circumference stacked along their major axes. The assembled moderator thereby has a substantially cylindrical symmetry with a centre line and the outer assembled segments defining the boundary of the moderator, said boundary being within a cylinder shape.

In one embodiment, the moderator has an outer boundary in the shape of a cylinder and the centre of the core is defined as the centre of the cylinder. The reactor core may comprise the moderator with an outer boundary other than a cylinder shape. In one embodiment, the moderator material is assembled in a spheroidal shape and the centre of the core is the centre of the sphere. In general, for the moderator in the core the centre of the core is the point where the moderating effect has the highest symmetry.

The core may further comprise a neutron reflecting material inside the reactor vessel. In one embodiment, a reactor vessel is containing the reactor core. In one embodiment, the reactor vessel has a cylindrical shape.

When a moderator is present, the reactor core is defined by the outer physical boundary of the moderator material. For the example of graphite being the moderator material, the reactor core outer boundary is inside any shielding used and such shielding may also be made of graphite. The molten fuel salt is preferably flowing through several openings in the moderator material in the core and exits the core through several openings. The reactor core outlet is at the location of an exit for molten fuel salt closest to the symmetry axis of the reactor core, said symmetry axis being parallel to the flow direction of the molten fuel salt.

In one embodiment, the reactor core outlet is at the location of the exit for molten fuel salt from the centremost molten fuel salt channel. In one embodiment, the reactor core outlet is at the location symmetrically between more than one exits for the molten fuel salt.

The neutron detector is an instrument detecting and measuring neutron radiation. These devices vary in their construction and operation and the neutron detector can be chosen from the list of gas-filled proportional detectors, scintillation detectors, and solid-state semiconductor detectors. Gas proportional detectors, employing gasses such as Helium-3, rely on neutron absorption reactions to produce charged particles, which are then detected due to their ionization ability. They are primarily sensitive to thermal neutrons. Similarly, scintillation detectors utilize materials that emit ion radiation upon interaction with neutrons, which is then detected due to the emission of photons caused by the interaction of the ions with the media of the scintillator. They can be either based on neutron absorption (for thermal neutron detection) or recoil (for fast neutron detectors). Solid-state semiconductor detectors rely on semiconductor materials doped with neutron-absorptive elements, producing charge carriers that are collected to create an electrical output.

**Neutron source strength (S) and operating parameters.**

The present inventors have found that it is possible to obtain one or more calculated operating parameters like for example the reactor power Q or the temperature T of the molten fuel salt with a high accuracy for an MSR by measuring the neutron source strength.

The starting point is the modified point kinetics (MPK) equations, which is a simplified way to represent the dynamics of molten salt reactors found in the literature [1] and [2],

[1] M. S. Greenwood and B. Betzler, "Modified point-kinetics model for neutron precursors and fission product behavior for fluid-fueled molten salt reactors," Nuclear Science and Engineering, vol. 193, no. 4, pp. 417-430, 2019.
[2] A. Cammi, V. Di Marcello, C. Guerrieri, and L. Luzzi, "Transfer Function Modeling of Zero-Power Dynamics of Circulating Fuel Reactors," Journal of Engineering for Gas Turbines and Power, vol. 133, 12 2010. 052916.

The MPK equations are:

$$\frac{dQ(t)}{dt} = \frac{\rho(t) - \beta}{\Lambda} Q(t) + \frac{w_f}{\Lambda \, v} \sum_k \lambda_k \Omega_k(t), \tag{1}$$

$$\frac{d\Omega_k(t)}{dt} = \frac{v\beta_k}{w_f} Q(t) - \lambda_k \Omega_k(t) + \frac{1}{\tau_c} \Big( \Omega_k(t - \tau_e) \exp(-\lambda_k \tau_e) - \Omega_k(t) \Big). \tag{2}$$

where

Q [W] is the thermal power due to fission deposited in the fuel, $\rho$ [-] the reactivity,
$\beta$ [-] the total delayed neutron fraction,
$\Lambda$ [s] the prompt neutron generation time,
$w_f$ [J] the energy released per fission,
$v$ [-] the average number of neutrons per fission,
$\lambda_k$ [1/s] the decay constant of the precursor group k and
$\Omega_k$ [atoms] the number of precursor atoms of group k in the core, i.e. it is an integral of concentration $C_k$ [atoms/m$^3$] over the active core.

Additionally, $T_c$ [s] is the residence time in the core.
Delayed neutrons are commonly categorized as being in six groups. Each of these groups "k" are characterized by a fractional yield $\beta_k$ and a decay constant $\lambda_k$.
Table 1 lists the properties of the six groups of delayed neutrons emitted during the fission of $^{235}$U. The fractional yield $\beta_k$ is the number of delayed neutrons in a reactor operating at steady state, which are due to neutron emission from decay of fission products (the delayed neutron precursors) in group k. The total yield of delayed neutrons is the sum of the fractional values $\beta_k$ over all groups k.

| Group | Probable precursor | Half-life s | Effective yield $\beta_i$ | % of delayed neutrons 100 $\beta_i/\beta$ = $f_i$ | Number of fission neutrons delayed per fission |
|---|---|---|---|---|---|
|  |  |  |  |  |  |
| 1 | $^{87}$Br | 55.72 | 0.00021 | 3.23 | 0.00052 |
| 2 | $^{137}$I | 22.72 | 0.00141 | 21.7 | 0.00346 |
| 3 | $^{89}$Br | 6.22 | 0.00127 | 19.55 | 0.00310 |
| 4 | $^{139}$I | 2.30 | 0.00255 | 39.3 | 0.00624 |

(continued)

| Group | Probable precursor | Half-life s | Effective yield $\beta_i$ | % of delayed neutrons $100\ \beta_i/\beta = f_i$ | Number of fission neutrons delayed per fission |
|---|---|---|---|---|---|
| 5 | $^{85}$As | 0.610 | 0.00074 | 11.4 | 0.00182 |
| 6 | $^9$Li | 0.230 | 0.00027 | 4.16 | 0.00066 |
| Total delayed | | | | | 0.00158 |
| Fraction delayed $\beta$ | | 0.0065 | | | |
| Weighted mean life ($\tau$) = 12.3 s  Total fission neutrons = 2.43 | | | | $\lambda_i$ = decay constant = ln 2/t½  $T_i$ = mean life = t½/ln 2 | |

To derive the above MPK equations (1) and (2), the concentration of delayed neutron precursors at the core outlet has been taken to be equal to the average core concentration of the delayed neutron precursors. The core inlet concentration of delayed neutron precursors has also been related to the core outlet concentration by assuming an ex-core residence time $\tau_e$ [s].

The resulting MPK equations are a coupled set of delayed-differential equations.

Based on the above equations, it is possible to write the expression for the neutron source strength $S_m$[1/(m³·s)] at a measurement point "m" with distance $L_m$ [m] and delay time $\tau_m$ [s] from the reactor outlet as follows:

$$S_m(t) = \sum_k \lambda_k C_k(L_m, t) = \sum_k \lambda_k C_{k,out}(t - \tau_m)\exp(-\lambda_k \tau_m). \qquad (3)$$

In the above expression, the concentration of delayed neutron precursors at the measurement location and given time $C_k(L_m,t)$ is related to the concentration of delayed neutron precursors at the core outlet and delayed by the delay time $\tau_m$, i.e. $C_{k,out}(t-\tau_m)$; the law of exponential decay has also been taken into account. Assuming for simplicity that $C_{k,out} = \Omega_k/V_{rf}$, where $V_{rf}$ [m³] is the reactor fuel volume, we obtain: Restricted Access

$$S_m(t) = \frac{1}{V_{rf}} \sum_k \lambda_k \Omega_k(t - \tau_m)\exp(-\lambda_k \tau_m). \qquad (4)$$

This neutron source results in a neutron flux that can be measured by neutron detectors.

**Reactor power steady state**

The neutron source strength under steady-state conditions where the reactor power is constant over time gives rise to a relation of the measured neutron source strength and the reactor power as seen in the following.

Eqs. (1) and (2) become:

$$0 = \frac{\rho_0 - \beta}{\Lambda} Q_0 + \frac{w_f}{\Lambda\ \nu} \sum_k \lambda_k \Omega_{k,0}, \qquad (5)$$

$$0 = \frac{\nu\beta_k}{w_f} Q_0 - \lambda_k \Omega_{k,0} + \frac{1}{\tau_c}\left(\Omega_{k,0}\exp(-\lambda_k \tau_e) - \Omega_{k,0}\right) \qquad (6)$$

which leads to:

$$\Omega_{k,0} = \frac{\nu\beta_k}{w_f} Q_0 \bigg/ \left(\lambda_k + \frac{1}{\tau_c}\left(1 - \exp(-\lambda_k \tau_e)\right)\right), \qquad (7)$$

$$\rho_0 = \beta - \frac{w_f}{v} \sum_k \lambda_k \frac{\Omega_{k,0}}{Q_0} = \beta - \sum_k \beta_k \lambda_k \bigg/ \left( \lambda_k + \frac{1}{\tau_c}\left(1 - \exp(-\lambda_k \tau_e)\right) \right). \qquad (8)$$

This means that:

$$S_{m,0} = \frac{v}{w_f} \frac{1}{V_{rf}} Q_0 \sum_k \beta_k \lambda_k \bigg/ \left( \lambda_k + \frac{1}{\tau_c}\left(1 - \exp(-\lambda_k \tau_e)\right) \right) \cdot \exp(-\lambda_k \tau_m). \qquad (9)$$

All terms in the above expression are either physical constants ($v$, $w_f$, $\beta_k$, $\lambda_k$) or values describing the geometric configuration of the system ($V_{rf}$, $\tau_c$, $\tau_e$, $\tau_m$), except for the reactor steady-state power level $Q_0$.

Under steady-state conditions, the strength of the neutron source at the measurement location is directly proportional to the reactor power level and, if measured, can be used to obtain the reactor power by indirect sensing. An indirect sensing, also termed an indirect measurement means that the Restricted Access parameter that is being sought is obtained by measuring something else contrary to a direct measurement where exactly the parameter that is sought is being measured.

In one embodiment, a method of operating an MSR is provided, said MSR comprising a reactor core, a fuel loop for molten fuel salt providing a flow path of molten fuel salt into the reactor core through a reactor core inlet and out of the reactor core through a reactor core outlet, said method comprising the steps of: providing at least one location $m_i$ on the fuel loop at a distance $L_i$ measured along the flow path from the reactor core outlet, wherein the one or more locations $m_i$ is outside the reactor core, and the one or more locations $m_i$ is shielded from the reactor core; measuring the neutron source strength at the one or more locations $m_i$; obtaining one or more calculated operating parameters by calculation with input of the value of the measured neutron source strength at one or more locations $m_i$, said method does not provide a measurement of the neutron spectrum

In one embodiment, a method of operating an MSR is provided, said MSR comprising a reactor core, a fuel loop for molten fuel salt providing a flow path of molten fuel salt into the reactor core through a reactor core inlet and out of the reactor core through a reactor core outlet, said method comprising the steps of: providing at least one location $m_i$ on the fuel loop at a distance $L_i$ measured along the flow path from the reactor core outlet, wherein the one or more locations $m_i$ is outside the reactor core, and the one or more locations $m_i$ is shielded from the reactor core; measuring the neutron source strength at the one or more locations $m_i$; obtaining one or more calculated operating parameters by calculation with input of the value of the measured neutron source strength at one or more locations $m_i$, and wherein the one or more locations is not provided with an external neutron source.

In one embodiment, the one or more operating parameters are selected from:

- reactor power Q,
- fuel salt flow velocity,
- fuel salt temperature difference across the core,
- fuel salt temperature at location $m_i$
- reactor period.

In one embodiment, the operating parameter is the reactor power Q.

In one embodiment, the power $Q_0$ is calculated from the neutron source strength at location $m_i$ at steady-state conditions by the following formula:

$$S_{m,0} = \frac{v}{w_f} \frac{1}{V_{rf}} Q_0 \sum_k \beta_k \lambda_k \bigg/ \left( \lambda_k + \frac{1}{\tau_c}\left(1 - \exp(-\lambda_k \tau_e)\right) \right) \cdot \exp(-\lambda_k \tau_m)$$

,

where

$S_{m,0}$ is the measured neutron strength at location $m_i$

$v$ is the average number of neutrons per fission

$w_f$ is the energy released per fission

$V_{rt}$ is the reactor fuel volume

$\beta_k$ is the delayed neutron fraction of the precursor group k

$\lambda_k$ is the decay constant of the precursor group k

$\tau_c$ is the residence time in the core

$\tau_e$ is the ex-core residence time

$\tau_m$ is the delay time from the reactor outlet

The reactor power Q is an essential parameter to know for the operation of a nuclear reactor. The reactor power Q can be calculated from a neutron source strength measurement at a location $m_i$ on the fuel loop and provide a value with high accuracy. This is compared to the conventional enthalpy method of calculating the reactor power Q using the transfer of heat from a primary loop to a secondary loop. Although the enthalpy determination method also provides a high-accuracy value for a conventional LWR, there are disadvantages for using the enthalpy method for an MSR because a temperature measurement is needed as input. There is a lack of qualified temperature measurement instruments for molten salt that can withstand the elevated temperature (over an extended period) and the potentially corrosive nature of the salt mixture. Also, the higher temperatures and transmutation of the elemental composition of the transduction and/or insulation component, and the mechanical vibrations of the thermowells due to the high-velocity salt flow makes a direct temperature measurement challenging. Furthermore, the primary and secondary loops involved in an MSR transport very large masses of molten salt which causes a much longer transfer time of heat from one loop to the other.

In one embodiment, the operating parameter is the fuel salt temperature difference across the core.

In one embodiment, the operating parameter is the fuel salt temperature at location $m_i$.

A simple model for the outlet temperature $T$ [K] can be assumed to be of the form:

$$\frac{dT(t)}{dt} = \frac{Q(t)}{C_f} + \frac{1}{\tau_c}\left(T(t - \tau_e) - \Delta T_p - T(t)\right), \qquad (10)$$

where $C_f$ is the fuel heat capacity in the core [J/K], $\tau_c$ is the residence time in the core and $\Delta T_p$ the fuel temperature difference across the primary heat exchanger (assumed constant for simplicity).

Under steady-state conditions, this equation reduces to:

$$\Delta T_p = \frac{\tau_c}{C_f} Q_0. \qquad (11)$$

This is also equal to the steady-state fuel salt temperature difference across the core, $\Delta T_{c,0}$. Since $\tau_c$ and $C_f$ are parameters describing this system, it means that the temperature difference is directly proportional to $Q_0$ and thus to $S_{m,0}$. The steady-state fuel temperature difference across the core, $\Delta T_{c,0}$, can thus be indirectly measured via the measurement of the neutron source strength at location $m_i$, $S_{m,0}$.

In one embodiment, the calculated steady-state fuel salt temperature difference across the core is calculated by:

$$\Delta T_{c,0} = \frac{\tau_c}{C_f} Q_0$$

where

$\Delta T_{c,0}$ is the steady-state fuel temperature difference across the core

$C_f$ is the fuel salt heat capacity in the core

$\tau_c$ is the residence time in the core

$Q_0$ is the calculated steady-state reactor power

and

$$S_{m,0} = \frac{\nu}{w_f} \frac{1}{V_{rf}} Q_0 \sum_k \beta_k \lambda_k \Bigg/ \left(\lambda_k + \frac{1}{\tau_c}\left(1 - \exp(-\lambda_k \tau_e)\right)\right) \cdot \exp(-\lambda_k \tau_m)$$

,

As mentioned above, there is a lack of durable temperature detectors for directly measuring the molten salt temperature. The embodiment according to the invention of calculating the temperature with the input from the neutron source strength at one or more locations on the fuel loop provides an advantageous way of determining the temperature of the molten fuel salt.

In one embodiment, the operating parameter is the reactor period.

The reactor period is a specification of a limiting rate of neutron power rise (measured by excore detectors). The reactor period, $\tau_e$, or e-folding time, is defined as the time required for the neutron density to change by a factor e = 2.718. The reactor period is usually expressed in units of seconds or minutes.

The reactor period operating parameter is conventionally calculated from the fast signal. A value of the reactor period can nevertheless also be calculated based on the slow signal according to an embodiment of the invention.

The reactor period-value calculated with a slow signal will represent a delayed value for the reactor. It may be of value to have a measurement of the reactor period even though it has a time-delay because it is in general of value to have redundant determinations of the same parameter. Such an extra determination of the reactor period is anyway simple to obtain given that the calculation is fairly simple

In one embodiment, two calculated operating parameters are obtained, preferably three calculated operating parameters are obtained, preferably four calculated operating parameters are obtained, preferably five calculated operating parameters are obtained.

In one embodiment, one or more operating parameters are adjusted based on one or more calculated operating parameter values.

In one embodiment, the operating parameter is the fuel salt flow velocity.

The delay time of the delayed neutrons is a constant whereas the flow rate may vary. This will enable a determination of the flow rate of the fuel salt.

In one embodiment, the fuel salt flow velocity is obtained from a neutron source measurement on two locations $m_1$ and $m_2$ on the fuel loop.

In one embodiment, the fuel salt flow velocity is obtained from a neutron source measurement on one location $m_1$ on the fuel loop and a neutron source measurement from one or more excore neutron detectors. An excore neutron detector provides a measurement of the prompt neutron source strength, thus from a position in the reactor core. The excore neutron detectors are necessary as input for the reactor safety system of the control rods to work. These detectors are therefore anyway installed and can be used as one of the at least two locations for detectors for a flow velocity measurement where the location is defined as the centre of the reactor core.

**Shielding of an MSR**

The measurement of the neutron source strength at a location on the fuel loop provides input to the calculation of an operating parameter. The neutron source strength will be the result of both neutrons emerging from fission events in the reactor and the delayed neutrons from decay of Delayed Neutron Precursors (DNPs).

The calculation of the operating parameters such as the reactor power is based on the value of the neutron source strength of the delayed neutrons at the one or more locations $m_i$. It is therefore desirable to shield the one or more locations $m_i$ is from the core so that the fission neutrons from the core do not appreciably affect the neutron source strength value at $m_i$.

In one embodiment, the shielding of the location $m_i$ from the reactor core is a location shielding and said location shielding is done at a segment of the fuel loop at the location $m_i$, said segment comprising a collar structure surrounding the segment of the fuel loop.

In one embodiment, the at least one detector for the neutron source strength has a ring-shape configured to surround a segment of the fuel loop.

The segment of the fuel loop is preferably a piping segment that provides a flow path for the molten fuel salt. It is advantageous to adapt the shape of the location shielding to the shape of the pipe. In one embodiment, the location shielding comprises a collar structure. In one embodiment, the location shielding is separable from the segment such as the piping segment. This enables a separation and thereby a detachment of the location shielding and moving from one preferred location $m_1$ to another location $m_2$ where the location shielding can be attached.

The collar structure comprises preferably an annular shape such as a tube that can fit to surround the segment of the loop. The annular shape can be made of a nuclear structural material or a structural material in combination with a neutron absorber. A preferred material of the annular shape is a nuclear structural material, such as an SS316 austenitic steel, preferably in combination with a boron carbide (B4C) containing absorber.

In one embodiment, the collar structure comprises a tube of SS316 austenitic steel that can fit to surround the segment of the loop, said tube having a thickness of 5 to 20 cm, such as 8 to 15 cm. The tube thickness is measured radially from the inner wall to the outer wall of the tube.

In one embodiment, the shielding of the location $m_i$ from the core comprises a shielding of the reactor core.

The shielding of the location $m_i$ can be accommodated by a core shielding or a location shielding of the location $m_i$ or a combination of a core shielding and a location shielding.

The core is conventionally shielded irrespective of any other shielding possibly present at the location $m_i$. Such a core shielding may be constituted by a reactor vessel of a constructional material, for example SS316 of 5-10 cm thickness in combination with a graphite inner lining of the reactor vessel being for example 30-80 cm thick. Such a core shielding may be sufficient to provide a neutron strength measurement at the location $m_i$ that represents the delayed neutron strength at the location $m_i$, so a location shielding at the location $m_i$ of the loop can be fully or partly avoided.

In one embodiment, 70-99% of the neutron source strength value at $m_i$ is from delayed neutrons, such as 80-95 % of the neutron source strength value at $m_i$ is from delayed neutrons.

The above values for the neutron source strength value from delayed neutrons at $m_i$ are found to be sufficient for providing an input to the calculation of the operating parameters that results in a reliable determination of the operating parameters.

In one embodiment, the MSR further comprises excore neutron detectors that provides input for a fast signal for control rods.

The provision of excore neutron detectors will provide input for a fast signal which is of importance for the control of for example the control rods in the case of a rapid power excursion.

It can also be of value for the control of the MSR to compare the power value obtained from the fast signal with the power value obtained with a calculation according to the invention.

In one embodiment, a determined location $m_i$ is determined from a maximum value of the ratio R = Delayed neutron strength/Prompt neutron source strength at $m_i$.

The determined location $m_i$ is the result of a calculation where the core is shielded and the segment of the fuel loop at the location $m_i$ is not provided with a shielding. For the purpose of carrying out the calculation, the location $m_i$ is not provided with a shielding. The reason is that the calculation will provide a better overview of the influence of the prompt neutron source strength on the ratio R without a location shielding and especially if the prompt neutron source strength at $m_i$ is of a magnitude that necessitate further shielding than the shielding of the reactor core.

Preferably, a shielding of the location $m_i$ from the reactor core is provided at a segment of the fuel loop at a location $m_i$. where the ratio R = Delayed neutron strength/Prompt neutron source strength has a maximum value at $m_i$.

A location $m_i$ with a maximum value of the ratio R = Delayed neutron strength/Prompt neutron source strength at the loop provides an advantageously input for the power calculation. Furthermore, such a location has the least need of a shielding from the prompt neutrons because the signal from the delayed neutrons has a relative maximum value.

## Primary, secondary and third loop.

The flow of the molten fuel salt into the core of the MSR results in a fission process of the fissile material of the fuel and a temperature increase in the fuel salt so that the fuel salt obtains a higher temperature at the core outlet than at the core inlet. The fuel salt flows in the fuel loop out of the core outlet to a primary heat exchanger transferring heat from the fuel salt to a secondary liquid of the primary heat exchanger.

The flow of the molten fuel salt thus defines a fuel loop for the molten fuel salt providing a flow path of the molten fuel salt, said fuel loop also being termed the primary loop. The molten fuel salt constitutes both the reactor fuel and a primary heat exchanger fluid.

The part of the fuel loop from the core outlet to the primary heat exchanger is termed the hot leg, or the hot leg of the fuel loop.

In one embodiment, the at least one location of $m_i$ is on the hot leg of the fuel loop.

The delayed neutron precursors from the fission reactors in the core are decaying with an inverse time dependency from the outset and consequently the concentration of the DNP's and the neutron source strength from the delayed neutron precursors have a maximum at the core outlet. To obtain the strongest signal for the neutron detector at a location $m_i$, it would therefore be an advantage to have a location $m_i$ near the core outlet and on the hot leg of the fuel loop. This will however represent a higher demand of shielding from the prompt neutrons because such a location will also be close to the reactor. It has anyway shown that it is possible to obtain a viable neutron source strength for a reliable reactor power calculation with a location $m_i$ on the hot leg of the fuel loop.

After the fuel salt exits the primary heat exchanger it flows back to the core inlet. This part of the fuel loop from the primary heat exchanger outlet to the core inlet is termed the cold leg, or the cold leg of the fuel loop.

In one embodiment, the at least one location of $m_i$ is on the cold leg of the fuel loop. Restricted Access

The fuel loop is considered to be part of the MSR.

The primary heat exchanger may be constituted by one single heat exchanger or several smaller heat exchangers for the fuel loop.

In one embodiment, a primary heat exchanger transfers heat from the fuel salt to a secondary liquid, said secondary liquid having a flow defining a secondary loop for the secondary liquid, said secondary liquid being a molten salt or a molten metal, preferably an alkali-based metal.

In one embodiment, the MSR further comprises a location $n_i$ on the secondary loop, the location $n_i$ preferably being shielding from the core, wherein the neutron source strength at the one or more locations $n_i$ is measured.

The index "i" denotes the specific location and distinguishes several locations from each other, for example two

locations $m_1$ and $m_2$ from each other.

In one embodiment, a primary heat exchanger transfers heat from the fuel salt to a secondary liquid, said secondary liquid having a flow defining a secondary loop for the secondary liquid; and one or more locations $n_i$ is provided on the secondary loop, the location $n_i$ preferably being shielding from the reactor core, wherein the neutron source strength at the one or more locations $n_i$ is measured.

The molten fuel salt and the secondary liquid are separated by a barrier to prevent mixing of the two liquids in the primary heat exchanger. In the event that the two liquids are mixed such as by a breach in the barrier for example a piping wall, then the secondary liquid will contain delayed neutron precursors from the fuel salt. Such an accident event can be detected with a measurement of the neutron source strength at one or more locations $n_i$.

In one embodiment, a secondary heat exchanger transfers heat from the secondary liquid to a tertiary liquid, said tertiary liquid having a flow defining a tertiary loop for the tertiary liquid, said tertiary liquid being a molten salt or a molten metal, preferably an alkali-based metal.

In one embodiment, a steam loop is provided with a flow loop for water steam and a heat exchanger is provided for heat exchange from a secondary liquid or a tertiary liquid to the flow loop for water steam. The obtained heated steam supplies a working fluid to a steam turbine to produce electricity.

In one embodiment, there are provided two locations on the fuel loop, $m_1$ and $m_2$, such as three locations on the loop, $m_1$, $m_2$, and $m_3$, such as n locations on the loop, $m_1$, ... $m_n$, where n is between 4 and 20, such as n is between 5 and 10.

Although a neutron detector at one location $m_i$ may provide a value of the delayed neutron strength sufficient for a calculated operating parameter, such as a calculation of the reactor power according to the invention, it may be an advantage to have more than one location on the fuel loop to provide input to the calculation. The more detectors that are employed, the more complex information can be extracted. Indeed, one could draw a parallel between this approach and Computational Tomography (CT), in which two-dimensional cross-sectional images of an object are taken in order to reconstruct a representation of the full three-dimensional object.

In one embodiment, there is provided an MSR comprising: a reactor core, a fuel loop for molten fuel salt providing a flow path of molten fuel salt into the reactor core through a reactor core inlet and out of the reactor core through a reactor core outlet, at least one location $m_i$ on the fuel loop at a distance $L_i$ measured along the flow path from the reactor core outlet, wherein the one or more locations $m_i$ is outside the reactor core, and the one or more locations $m_i$ is shielded from the reactor core, at least one detector for a neutron source strength at the one or more locations $m_i$, preferably adapted to a method according to at least one of the claims 1-14.

In one embodiment, there is provided an MSR comprising: a reactor core, a fuel loop for molten fuel salt providing a flow path of molten fuel salt into the reactor core through a reactor core inlet and out of the reactor core through a reactor core outlet, at least one location $m_i$ on the fuel loop at a distance $L_i$ measured along the flow path from the reactor core outlet, wherein the one or more locations $m_i$ is outside the reactor core, and the one or more locations $m_i$ is shielded from the reactor core, at least one detector for a neutron source strength at the one or more locations $m_i$, wherein there are two locations on the fuel loop, $m_1$ and $m_2$, such as three locations on the loop, $m_1$, $m_2$, and $m_3$, such as n locations on the fuel loop, $m_1$, ... $m_n$, where n is between 4 and 20, such as n is between 5 and 10.

## Detailed Description

The present invention will now be illustrated with reference to the accompanying drawing and in the following non-limiting examples.

## Brief description of the drawings

In the following the invention will be explained in greater detail with the aid of examples and with reference to the graphs and schematic drawings, in which:

Fig. 1 shows the steady-state neutron source strength as a function of the reactor power. The system configuration corresponds to the Molten Salt Reactor Experiment (MSRE).

Fig. 2 shows the neutron source strength after an instantaneous jump of power from $Q_0$ to $1.1Q_0$ and normalised to the steady-state values as a function of time. The system configuration corresponds to the Molten Salt Reactor Experiment (MSRE).

Fig. 3 shows the neutron source strength and the temperature at the location $m_i$ after an instantaneous jump of power from $Q_0$ to $1.1Q_0$ and normalised to the steady-state values as a function of time. The system configuration corresponds to the Molten Salt Reactor Experiment (MSRE).

Fig. 4 shows the temperature at the location $m_i$ normalised to the steady-state values as a function of the neutron source strength normalised to the steady-values after an instantaneous jump of power from $Q_0$ to $1.1Q_0$. The system

configuration corresponds to the Molten Salt Reactor Experiment (MSRE).

Fig. 5 shows the transient response of the neutron source strength normalised to the steady-state values at two different locations $m_1$ and $m_2$ as a function of time after an instantaneous jump of power from $Q_0$ to $1.1Q_0$. The system configuration corresponds to the Molten Salt Reactor Experiment (MSRE).

Fig. 6 shows the neutron source strength after an increase in the molten fuel salt pump power. The system configuration corresponds to the Molten Salt Reactor Experiment (MSRE).

Fig. 7 shows an embodiment of an MSR according to the invention.

Example 1

Steady-state power level

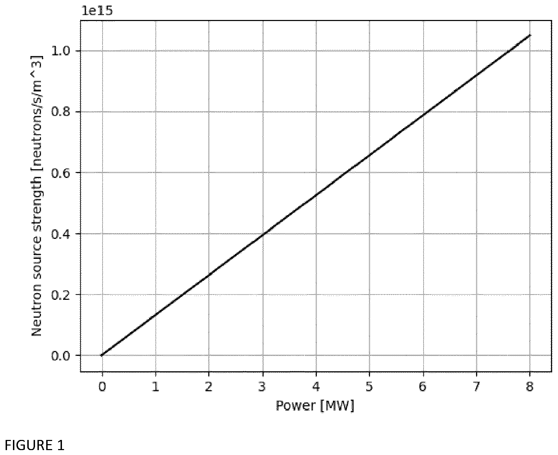

The dependence of reactor power on the neutron source strength given in Eq. 9 is illustrated in Fig. 1 for the MSR of the Molten Salt Reactor Experiment (MSRE) that took place at Oak Ridge National Laboratory (ORNL) in 1965-1969. The MSRE is the first example of an operational MSR, see for example P.N. Haubenreich & J.R. Engel (1970). "Experience with the Molten-Salt Reactor Experiment". Nuclear Applications and Technology. 8 (2): 118-136 for a description of the system configuration. The relevant reactor parameter values for Eq. 9, such as the geometric configuration of the system was adapted from the MSRE literature and a measurement location on the fuel loop was taken to correspond to $\tau_m = 7$ s.

Example 2

Power level transient

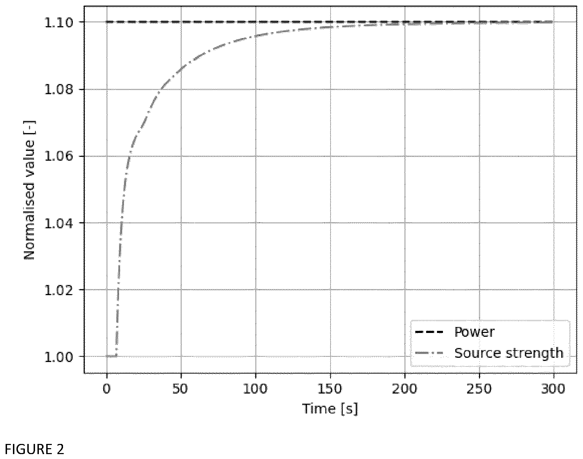

In this example, a reactivity excursion event arises in the MSRE described in Example 1 which results in a transient where the power level jumps instantaneously at $t = 0$ s to 110% of its steady-state value, i.e., from $Q_0$ to $1.1Q_0$. Using equations Eq. 1 to Eq. 9, the response of $S_m$ can be derived with the result shown in Fig. 2. The shown responses are normalised to the steady-state values.

It is seen in Fig. 2 that after the initial delay of 7 s, the source strength starts to adjust to the new nominal value, i.e. $1.1S_m$. The source strength signal follows the power signal with a delay due to the time constants of the governing equations (time delay terms, half-lives of the precursor groups). Thus, it is seen that the measurement of $S_m$ can represent the "slow signal" for power measurement in a molten salt reactor.

Example 3

Temperature transient

In this example, a reactivity excursion event arises as described in Example 2 in the MSRE as described in Example 1 which results in a transient where the power level jumps instantaneously at $t = 0$ s to 110% of its steady-state value, i.e., from $Q_0$ to $1.1Q_0$.

The power level jump will cause the temperature of the molten fuel salt to increase as measured at a location $m_i$ on the fuel loop. The temperature is normalized in the following so that the value at the reactor core inlet is taken as zero. Also, the primary heat exchanger is assumed to be perfect, meaning that it is able to compensate for the increase in temperature by a corresponding increase in heat removal. The above normalization and assumption mean that, effectively, the inlet temperature to the core becomes constant and equal to zero and Eq. 10 simplifies to:

$$\frac{dT(t)}{dt} = \frac{Q(t)}{C_f} - \frac{T(t)}{\tau_c}. \tag{12}$$

The temperature $T_m$, at the location $m_1$ is defined as:

$$T_m(t) = T(t - \tau_m). \tag{13}$$

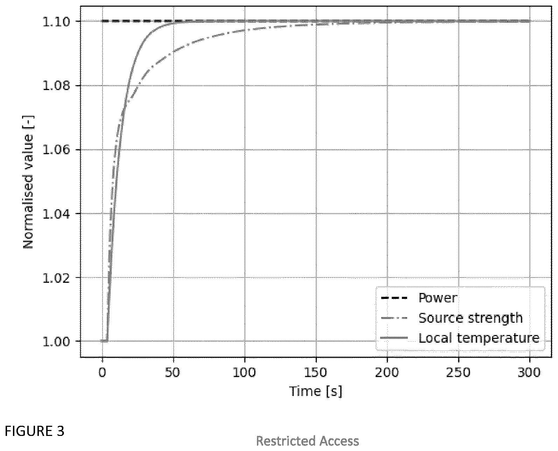

The resulting response of $T_m$ for the reactivity excursion event is plotted in Fig. 3. The shown responses are normalised to the steady-state values.

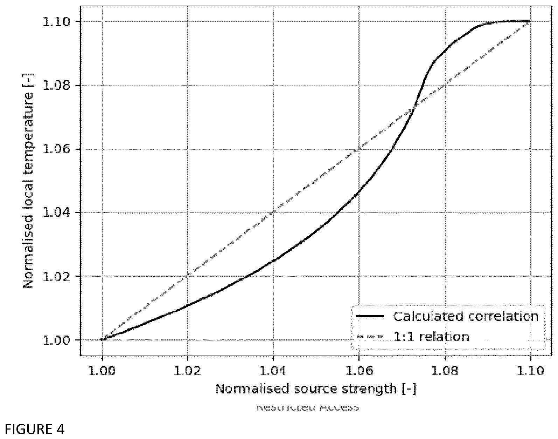

The evolution of the neutron source strength at the location $m_i$ is also shown, for reference along with the instantaneous power level jump at $t = 0$ s to 110% of its steady-state value. Furthermore, the comparison between the two signals, i.e., temperature $T_m$ at location $m_i$ and the measured neutron strength $S_m$ at location $m_i$ is given in Fig. 4. The dashed line indicates a perfect correlation between the two signals. It is possible with calibration to correlate and determine the transient response of $T_m$ from the measurement of $S_m$.

Example 4

Molten fuel salt velocity for a power level transient

In this example, a reactivity excursion event arises as described in Example 2 in the MSRE as described in Example 1 which results in a transient where the power level jumps instantaneously at $t = 0$ s to 110% of its steady-state value, i.e., from $Q_0$ to $1.1Q_0$.

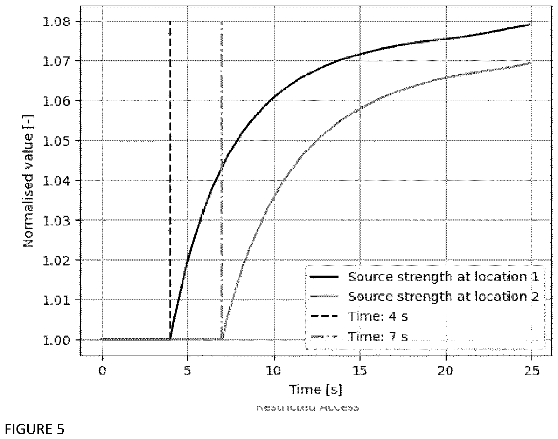

Two neutron source strength detectors are used, one at physical distance $L_1$ and one at physical distance $L_2$ from the reactor outlet. After the occurrence of the power level jump, an evolution of the neutron source strength at respective locations $m_1$ and $m_2$ is observed as shown in Fig. 5. Since the disturbance at the respective locations $m_1$ and $m_2$ is detected with different delays $\tau_{mi}$, in this particular case 4 s and 7 s, one can deduce the fuel salt flow velocity $U$ [m/s] as:

$$U = (L_2 - L_1)/(\tau_{m2} - \tau_{m1}) \qquad (14)$$

It can be considered that the onset of the disturbance originates in the reactor core (i.e. with a delay of 0 s) and it is therefore alternatively possible to estimate the flow rate velocity as:

$$U = L_i / \underline{\tau_{mi}} \qquad (15)$$

where i could be 1 or 2, depending on the detector chosen.

Example 5

Relative molten fuel salt velocity for a flow increase
In this example, the flow velocity of the molten fuel salt is increased for example by an increase in the fuel salt pump power. The event arises for the MSRE as described in Example 1.

There is a steady-state power situation with the power set to $Q_0$ corresponding to a measurement of $S_{m,0}$ as per Eq. 9. $S_{m,0}$ is directly proportional to $Q_0$ as previously discussed. At the same time, it is possible to notice that all previous calculations have been performed under the assumption of a constant flow rate (i.e. constant velocity).

In the event that the power is kept constant, and the flow rate is varied instead, this will lead to the change of the delay terms $\tau_c$, $\tau_e$ and $\tau_m$. It is a good approximation to assume that:

$$\tau_c(U) = \frac{U_0}{U}\tau_{c,0}, \qquad (16)$$

$$\tau_e(U) = \frac{U_0}{U}\tau_{e,0}, \qquad (17)$$

$$\tau_m(U) = \frac{U_0}{U}\tau_{m,0}, \qquad (18)$$

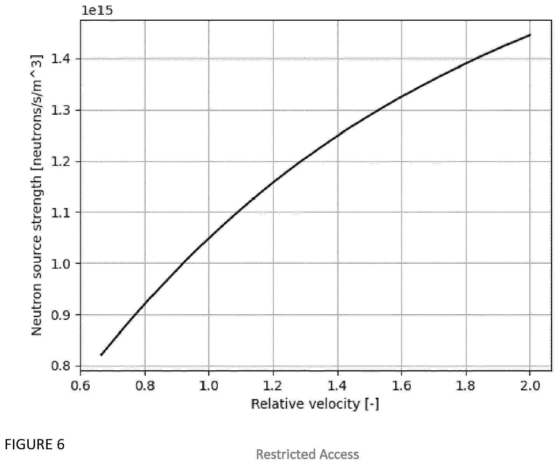

where $U_0$ is the nominal velocity and $\tau_{c,0}$, $\tau_{e,0}$ and $\tau_{m,0}$ are the corresponding nominal delay terms. The variation of velocity $U$ relative to the nominal value can be deduced from the variation of $S_m$, since the change in velocity $U$ will lead to a change in the delay terms and consequently in $S_m$ as demonstrated by Eq. 9. This holds provided that the power of the reactor is constant; this condition can be verified through independent measurement of the power. This method is illustrated in Fig. 6 for the Molten Salt Reactor Experiment (MSRE) for nominal power of 8 MW and a measurement location with nominal delay $\tau_{m,0} = 7$ s.

**Reference signs list**

1 an MSR

2 a reactor core

3 a fuel loop

4 a flow direction arrow

5 a reactor core inlet

6 a reactor core outlet

7 a first location $m_1$

8 a second location $m_2$

91, 92, 93 a neutron detector

10 a location shielding

11 a segment of the fuel loop

12 a collar structure

13 a shielding of the reactor core

14 an excore neutron detector

15 the hot leg of the fuel loop

16 the cold leg of the fuel loop

17 a primary heat exchanger

18 a secondary loop for the secondary liquid

19 a location $n_i$

20 a secondary heat exchanger

The invention is not limited to the embodiment/s illustrated in the drawings. Accordingly, it should be understood that where features mentioned in the appended claims are followed by reference signs, such signs are included solely for the purpose of enhancing the intelligibility of the claims and are in no way limiting on the scope of the claims.

The term "comprising" as used in this specification and claims means "consisting at least in part of". When interpreting statements in this specification and claims which include the term "comprising", other features besides the features prefaced by this term in each statement can also be present. Related terms such as "comprise" and "comprised" are to be interpreted in a similar manner.

## A molten salt reactor (MSR)

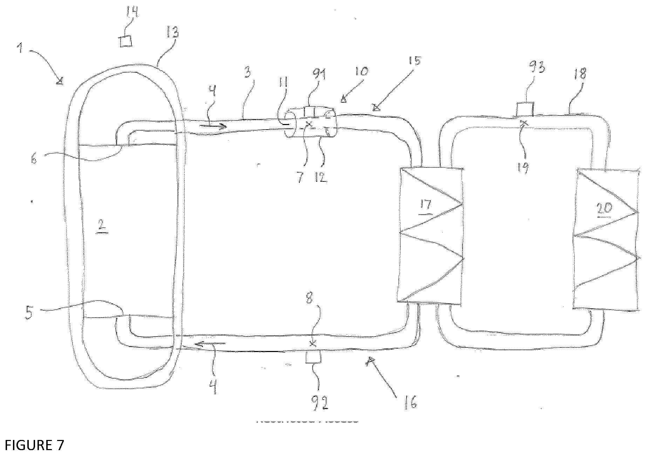

An MSR 1 according to the invention is shown in Figure 7 having a reactor core 2 comprising a moderator material. A molten fuel salt flows in the direction shown by arrow 4 into the reactor core through the shielding 13 of the reactor core and further through the reactor core inlet 5 and through the core 2 and out through the reactor core outlet 6. An excore neutron detector 14 is seen outside the reactor core.

The flow of the reactor core fuel constitutes a fuel loop 3 and a first location $m_1$ 7 is shown on the hot leg 15 of the fuel loop inside the piping of the fuel loop in the molten fuel salt. The first location 7 is shielded with a location shielding 10 comprising a collar structure 12 made of an outer tube of boron carbide particles dispersed in a matrix material where the outer tube surrounds coaxially an inner tube of SS316 austenitic steel. The outer tube has a wall thickness of 5 cm, and the inner tube has a wall thickness of 10 cm. The collar structure 12 shields both the first location 7 and a segment 11 of the fuel loop so that the segment 11 of the fuel loop has a length of 0.5 m and the collar structure 12 also has a length of approximately 0.5 m. A neutron detector 91 is situated inside the collar structure in close proximity to the first location 7 so that the neutron detector is not blocked from measuring at the first location 7 by the collar structure material.

The hot leg 15 of fuel loop continues downstream from the first location 7 and the molten fuel salt enters a primary heat exchanger 17 where heat is withdrawn from the fuel salt and exchanged to a secondary loop 18 for a secondary liquid. After the fuel salt exits the primary heat exchanger, it flows towards a second location $m_2$ 8 on the cold leg 16 of the fuel loop. A neutron detector 92 is located in close proximity to the second location 8. The second location 8 is shown without a location shielding 10. Further downstream from the second location, the molten fuel salt enters the shielding 13 of the reactor core and re-enters the reactor core 2 through the reactor core inlet 5.

The secondary loop 18 for a secondary liquid has a location $n_i$ 19 on the secondary loop 18 and a neutron detector 93 is located in close proximity to the location $n_i$ 19. The secondary loop 18 also comprises a secondary heat exchanger 20 where heat is withdrawn from the secondary liquid and exchanged to a tertiary loop (not shown) for a tertiary liquid.

## Claims

1.   A method of operating an MSR, said MSR comprising

- a reactor core
- a fuel loop for molten fuel salt providing a flow path of molten fuel salt into the reactor core through a reactor core inlet and out of the reactor core through a reactor core outlet,

said method comprising the steps of:

- providing at least one location $m_i$ on the fuel loop at a distance $L_i$ measured along the flow path from the reactor core outlet, wherein

the one or more locations $m_i$ is outside the reactor core, and
the one or more locations $m_i$ is shielded from the reactor core

- measuring the neutron source strength at the one or more locations $m_i$
- obtaining one or more calculated operating parameters by calculation with input of the value of the measured neutron source strength at one or more locations $m_i$. Restricted Access

2. The method according to claim 1, wherein the one or more operating parameters are selected from:

- reactor power Q,
- fuel salt flow velocity,
- fuel salt temperature difference across the reactor core,
- fuel salt temperature at location $m_i$
- reactor period.

3. The method according to any one of claim 1 or 2, wherein the steady-state reactor power $Q_0$ is calculated from the neutron source strength at location $m_i$ at steady-state conditions by the following formula:

$$S_{m,0} = \frac{\nu}{w_f} \frac{1}{V_{rf}} Q_0 \sum_k \beta_k \lambda_k \bigg/ \left( \lambda_k + \frac{1}{\tau_c} \left( 1 - \exp(-\lambda_k \tau_e) \right) \right) \cdot \exp(-\lambda_k \tau_m)$$

where

$S_{m,0}$ is the measured neutron strength at location $m_i$
$\nu$ is the average number of neutrons per fission
$w_f$ is the energy released per fission
$V_{rf}$ is the reactor fuel volume
$\beta_k$ is the delayed neutron fraction of the precursor group k
$\lambda_k$ is the decay constant of the precursor group k
$\tau_c$ is the residence time in the reactor core
$\tau_e$ is the ex-core residence time
$\tau_m$ is the delay time from the reactor core outlet

4. The method according to any one of the above claims, wherein two calculated operating parameters are obtained, preferably three calculated operating parameters are obtained, preferably four calculated operating parameters are obtained, preferably five calculated operating parameters are obtained.

5. The method according to any one of the above claims, wherein one or more operating parameters are adjusted based on one or more calculated operating parameter values.

6. The method according to any one of the above claims, wherein the shielding of the location $m_i$ from the reactor core is a location shielding and said location shielding is done at a segment of the fuel loop at the location $m_i$, said segment comprising a collar structure surrounding the segment of the fuel loop.

7. The method according to any one of the above claims, wherein the at least one detector for the neutron source strength has a ring-shape configured to surround a segment of the fuel loop.

8. The method according to any one of the above claims, wherein the shielding of the location $m_i$ from the reactor core comprises a shielding of the reactor core.

9. The method according to any one of the above claims, wherein 70-99% of the neutron source strength value at $m_i$ is from delayed neutrons, such as 80-95 % of the neutron source strength value at $m_i$ is from delayed neutrons.

10. The method according to any one of the above claims, wherein the MSR further comprises excore neutron detectors that provides input for a fast signal for control rods.

11. The method according to any one of the above claims, wherein a determined location $m_i$ is determined from a maximum value of the ratio R = Delayed neutron strength/Prompt neutron source strength at $m_i$.

12. The method according to any one of the above claims, wherein at least one of the locations of $m_i$ is on the hot leg of the fuel loop.

13. The method according to any one of the above claims, wherein there are two locations on the fuel loop, $m_1$ and $m_2$, such as three locations on the loop, $m_1$, $m_2$, and $m_3$, such as n locations on the fuel loop, $m_1$, ... $m_n$, where n is between 4 and 20, such as n is between 5 and 10.

14. The method according to any one of the above claims, wherein a primary heat exchanger transfers heat from the fuel salt to a secondary liquid, said secondary liquid having a flow defining a secondary loop for the secondary liquid; and one or more locations $n_i$ is provided on the secondary loop, the location $n_i$ preferably being shielding from the reactor core, wherein the neutron source strength at the one or more locations $n_i$ is measured.

15. An MSR comprising:

   - a reactor core
   - a fuel loop for molten fuel salt providing a flow path of molten fuel salt into the reactor core through a reactor core inlet and out of the reactor core through a reactor core outlet,
   - at least one location $m_i$ on the fuel loop at a distance $L_i$ measured along the flow path from the reactor core outlet, wherein

      the one or more locations $m_i$ is outside the reactor core, and
      the one or more locations $m_i$ is shielded from the reactor core,

   - at least one detector for a neutron source strength at the one or more locations $m_i$, preferably adapted to a method according to at least one of the claims 1-14.

FIGURE 1

FIGURE 2

FIGURE 3

Restricted Access

FIGURE 4

FIGURE 5

FIGURE 6

FIGURE 7

EUROPEAN SEARCH REPORT

Application Number

EP 24 16 2790

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 300 516 A1 (FOCUSED ENERGY GMBH [DE]) 3 January 2024 (2024-01-03) * the whole document * | 1-15 | INV. G21C1/02 G21C3/54 |
| X | US 9 368 244 B2 (WOOLLEY ROBERT DANIEL [US]) 14 June 2016 (2016-06-14) * the whole document * | 1-15 | ADD. G21C1/03 |
| A | KR 2017 0104149 A (TERRAPOWER LLC [US]) 14 September 2017 (2017-09-14) * abstract; figures * * paragraphs [0051], [0114] * | 1-15 | |

**TECHNICAL FIELDS SEARCHED (IPC)**

G21C

The present search report has been drawn up for all claims

| Place of search | Date of completion of the search | Examiner |
|---|---|---|
| Munich | 22 July 2024 | Opitz-Coutureau, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 2790

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2024

| Patent document cited in search report | | Publication date | Patent family member(s) | | Publication date |
|---|---|---|---|---|---|
| EP 4300516 | A1 | 03-01-2024 | EP | 4300516 A1 | 03-01-2024 |
| | | | US | 2024006088 A1 | 04-01-2024 |
| US 9368244 | B2 | 14-06-2016 | US | 2015078504 A1 | 19-03-2015 |
| | | | WO | 2015038922 A1 | 19-03-2015 |
| KR 20170104149 | A | 14-09-2017 | AU | 2015374124 A1 | 25-05-2017 |
| | | | BR | 112017009664 A2 | 19-12-2017 |
| | | | CA | 2967463 A1 | 07-07-2016 |
| | | | CA | 2967467 A1 | 07-07-2016 |
| | | | CA | 2967473 A1 | 07-07-2016 |
| | | | CN | 107004446 A | 01-08-2017 |
| | | | CN | 107112054 A | 29-08-2017 |
| | | | CN | 107112055 A | 29-08-2017 |
| | | | EP | 3241217 A1 | 08-11-2017 |
| | | | EP | 3241218 A2 | 08-11-2017 |
| | | | EP | 3822987 A1 | 19-05-2021 |
| | | | JP | 6735279 B2 | 05-08-2020 |
| | | | JP | 7060381 B2 | 26-04-2022 |
| | | | JP | 2018500574 A | 11-01-2018 |
| | | | JP | 2018506047 A | 01-03-2018 |
| | | | JP | 2018507396 A | 15-03-2018 |
| | | | KR | 20170100027 A | 01-09-2017 |
| | | | KR | 20170104149 A | 14-09-2017 |
| | | | RU | 2017124543 A | 31-01-2019 |
| | | | RU | 2017124582 A | 01-02-2019 |
| | | | US | 2016189806 A1 | 30-06-2016 |
| | | | US | 2016189812 A1 | 30-06-2016 |
| | | | US | 2016189813 A1 | 30-06-2016 |
| | | | US | 2020118698 A1 | 16-04-2020 |
| | | | WO | 2016109442 A1 | 07-07-2016 |
| | | | WO | 2016109565 A2 | 07-07-2016 |
| | | | WO | 2016109579 A1 | 07-07-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 114974630 A

- WO 20014452 A

**Non-patent literature cited in the description**

- **M. S. GREENWOOD** ; **B. BETZLER**. Modified point-kinetics model for neutron precursors and fission product behavior for fluid-fueled molten salt reactors. *Nuclear Science and Engineering*, 2019, vol. 193 (4), 417-430

- **A. CAMMI** ; **V. DI MARCELLO** ; **C. GUERRIERI** ; **L. LUZZI**. Transfer Function Modeling of Zero-Power Dynamics of Circulating Fuel Reactors. *Journal of Engineering for Gas Turbines and Power*, 2010, vol. 133 (12), 052916
- **P.N. HAUBENREICH** ; **J.R. ENGEL**. Experience with the Molten-Salt Reactor Experiment. *Nuclear Applications and Technology*, 1970, vol. 8 (2), 118-136